Europäisches Patentamt

European Patent Office

Office européen des brevets

(19)

(11) **EP 1 517 501 A1**

(12) **EUROPEAN PATENT APPLICATION**
published in accordance with Art. 158(3) EPC

(43) Date of publication:
**23.03.2005 Bulletin 2005/12**

(21) Application number: **03736283.7**

(22) Date of filing: **26.06.2003**

(51) Int Cl.7: **H04L 27/38**, H03G 3/20,
H04L 1/02, H04B 7/08,
H04B 1/16

(86) International application number:
**PCT/JP2003/008144**

(87) International publication number:
**WO 2004/004270 (08.01.2004 Gazette 2004/02)**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **26.06.2002 JP 2002186753**

(71) Applicant: **MATSUSHITA ELECTRIC INDUSTRIAL
CO., LTD.
Kadoma-shi, Osaka 571-8501 (JP)**

(72) Inventor: **INOGAI, Kazunori
Kanazawa-ku, Yokohama-shi, Kanagawa 236-
(JP)**

(74) Representative: **Leeming, John Gerard
J.A. Kemp & Co.,
14 South Square,
Gray's Inn
London WC1R 5JJ (GB)**

(54) **RECEIVER DEVICE**

(57)     It is an object of the present invention to downsize a receiver of a mobile phone, its base station and the like. In the invention, a level measurement circuit 15a, a frequency offset detection circuit 16a, a frequency correction circuit 17a, a channel skewness detection circuit 18a, a channel skewness correction circuit 19a, and a maximum ratio synthesis circuit 3a are constructed by CORDICs 153, 171, 182, 191, 31 to 3M, and 200. Further, the level measurement circuit 15a and the frequency offset detection circuit 16a share the CORDIC 153 with each other.

FIG. 1

EP 1 517 501 A1

**Description**

TECHNICAL FIELD

The present invention relates to a receiver for performing AGC (Automatic Gain Control), carrier frequency offset correction, channel skewness correction, and maximum ratio synthesis of receiver signals in a mobile phone, its base station and the like.

BACKGROUND ART

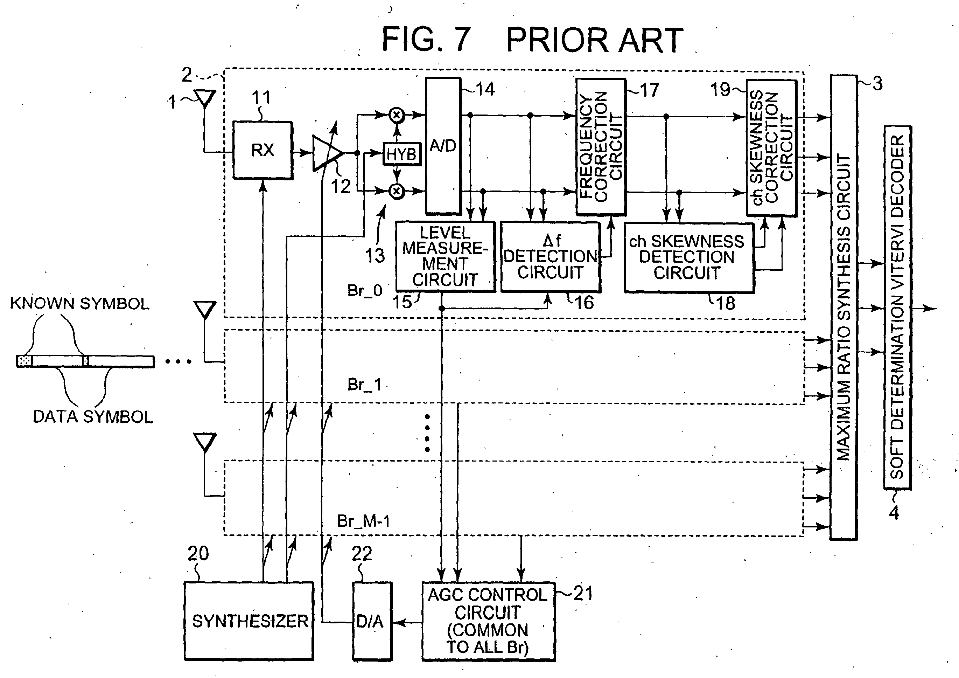

FIG. 7 shows a block diagram of a conventional and general M branch maximum ratio synthesis diversity receiver. In FIG. 7, signals wherein a known symbol having a constant amplitude in relation to a data symbol is inserted (either continuous insertion or random insertion can be used, however, an insertion position is to be known) are received at M pcs of receiving antennas 1, go through M pcs of receiving processing circuits 2 (shown as Br_k: k=0, 1...and M-1), are maximum-ratio synthesized at a maximum ratio synthesis circuit 3, and then decoded at a soft determination Vitervi decoder 4.

The receiving processing circuit 2 for each branch comprises an RX (radio receiving circuit) 11 for converting a receiver frequency by a local oscillation frequency of a synthesizer 20, a GCA (Gain Controlled Amplifier) 12, a quadrature cymoscope 13, an A/D converter 14, a level measurement circuit 15, a frequency offset ($\Delta$f) detection circuit 16, a frequency correction circuit 17, a channel (ch) skewness detection circuit 18, a channel (ch) skewness correction circuit 19 and the like. Digital circuits placed on the right side of the A/D converter 14 can be realized by a hardware or a firmware. However, in this specification, descriptions will be given on condition that these digital circuits are realized by a hardware.

In FIG. 7, first, in order to conduct AGC, the level measurement circuit 15 measures a receiving amplitude of the foregoing known symbol at each A/D conversion output point. Based on these measurement values, an AGC control circuit 21 decides a controlled amount for the GCA 12 (common to all branches), feeds back the controlled amount to the GCA 12 via a D/A converter 22, and thereby AGC is realized. AGC is intended to control an A/D conversion input amplitude to be in an appropriate range, so that a quantization error does not deteriorate an SN ratio of a signal associated with distance fluctuations along with movement of a terminal or level fluctuations caused by shadowing by geographical objects. In general, a response rate can be rather slow such as a few seconds.

Next, in order to conduct carrier frequency offset correction, the frequency offset detection circuit 16 detects and averages phase rotational rates of the foregoing known symbol, and thereby obtains a frequency offset $\Delta$f. Based on this value, the frequency correction circuit 17 negates the offset. Thereby, regarding a signal at an output point of frequency correction process, sluggish amplitude fluctuations and phase rotation are removed, and only instantaneous level fluctuations about several 100 Hz due to phasing or the like and a constant phase skewness remain.

Therefore, in order to conduct channel skewness correction, the channel skewness detection circuit 18 detects the instantaneous level fluctuations and the constant phase skewness, which are overlaid on the foregoing known symbol. The channel skewness correction circuit 19 removes the instantaneous level fluctuations and the constant phase skewness from a receiving symbol. An amplitude, a phase, and a frequency of the receiving symbol of each branch are corrected as above. At the maximum ratio synthesis circuit 3, an SN ratio can be improved by complex-adding receiving symbols while conducting weighting with a coefficient proportional to each SN ratio of each branch.

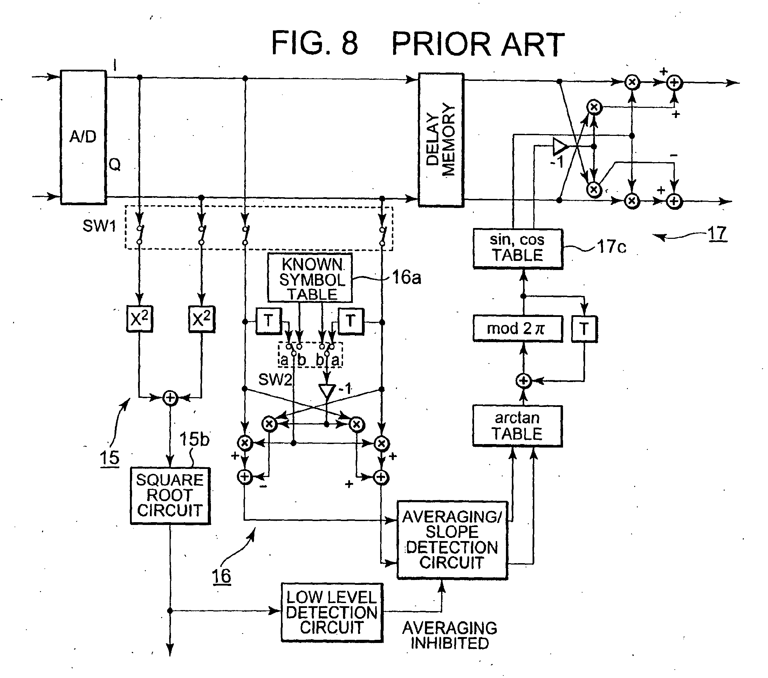

Details of each circuit will be hereinafter described based on conventional examples. FIG. 8 is a conventional example of the level measurement circuit 15, the frequency offset detection circuit 16, and the frequency correction circuit 17. In FIG. 8, the level measurement circuit 15 takes in a known symbol among A/D converted I and Q signals at a switch SW1, and an amplitude in Formula (1) is calculated.

Formula (1)

$$\sqrt{I^2+Q^2} \tag{1}$$

Meanwhile, the frequency offset detection circuit 16 similarly takes in the known symbol at the switch SW1. When symbol synchronization precision is not sufficient, complex multiplication between a receiving known symbol and a receiving known complex conjugate symbol which is one symbol before is conducted by connecting a switch SW2 to side a (output side of the A/D converter). In result, as a phase which a complex number of their product has, instantaneous rotational amounts per one symbol time can be obtained, which are averaged to obtain a frequency offset value $\Delta$f. However, detection precision in a low SN by this method is significantly deteriorated. Therefore, when a high-precision symbol synchronization is obtained, the switch SW 2 is connected to side b (a known symbol table 16a side), complex multiplication between a receiving known symbol and a known complex conjugate symbol is conducted, and instantaneous phase errors are obtained as a phase which a complex number of their product has. Then, slopes of phase errors in relation to time are obtained as instantaneous phase rotational rates by using minimum square method, and averaged to obtain a frequency offset value. These instantaneous phase rotational rates are averaged while values in a small amplitude are excluded, and then the frequency offset value $\Delta f$ is obtained. An unreliable instantaneous phase rotational rate value in a small receiving amplitude is excluded from the averaging process.

In the frequency correction circuit 17, the frequency offset $\Delta f$ is cancelled by, for example, complex-dividing a receiving symbol by a sine wave/cosine wave pair of an offset frequency generated with reference to a sin, cos table 17c.

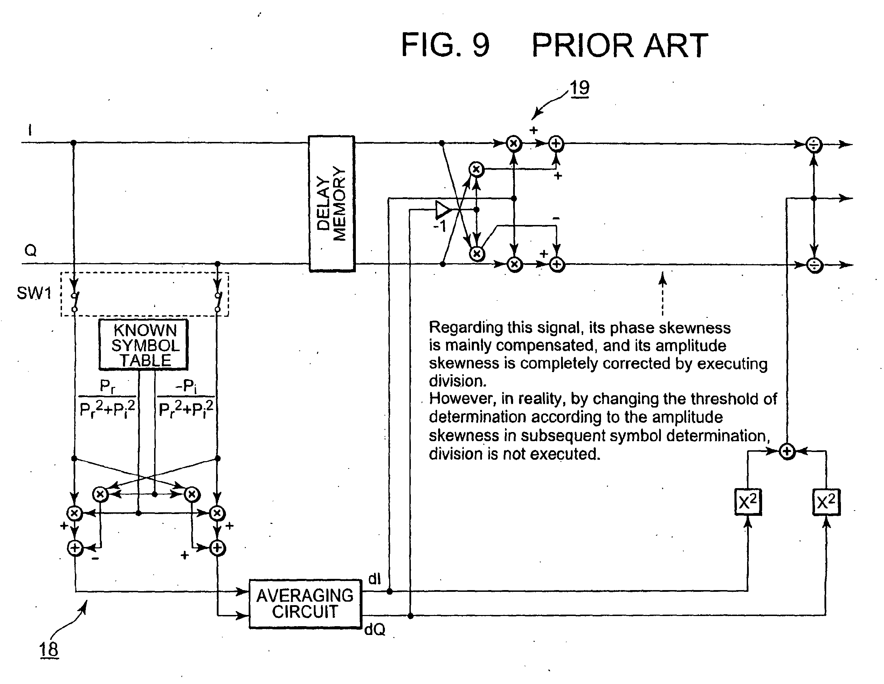

FIG. 9 is a conventional example of the channel skewness detection circuit 18 and the channel skewness correction circuit 19. A channel skewness can be obtained as a quotient when a receiving known symbol ($I_p$, $Q_p$) is complex-divided by a known symbol ($P_r$, $P_i$). In FIG. 9, complex multiplication is used as shown in Formula (2) by devising table values. Quotients thereof are averaged to obtain a channel skewness (dI, dQ).

Formula (2)

$$\frac{I_P + jQ_P}{P_r + jP_i} = \frac{(I_P + jQ_P)(P_r - jP_i)}{P_r^2 + P_i^2} = (I_P + jQ_P) \times \left( \frac{P_r}{P_r^2 + P_i^2} - j\frac{P_i}{P_r^2 + P_i^2} \right) \qquad (2)$$

Then, the channel skewness correction circuit 19 compensates the skewness by dividing into complex multiplication and actual number division as shown in Formula (3) by complex-dividing a receiving symbol (I, Q) by this channel skewness (dI, dQ). (Since dI and dQ are not fixed values as the known symbol, execution is not enabled as Formula (2).)

Formula (3)

$$\frac{I + jQ}{d I + jdQ} = (I + jQ)(dI - jdQ) \times \frac{1}{d I^2 + dQ^2} \qquad (3)$$

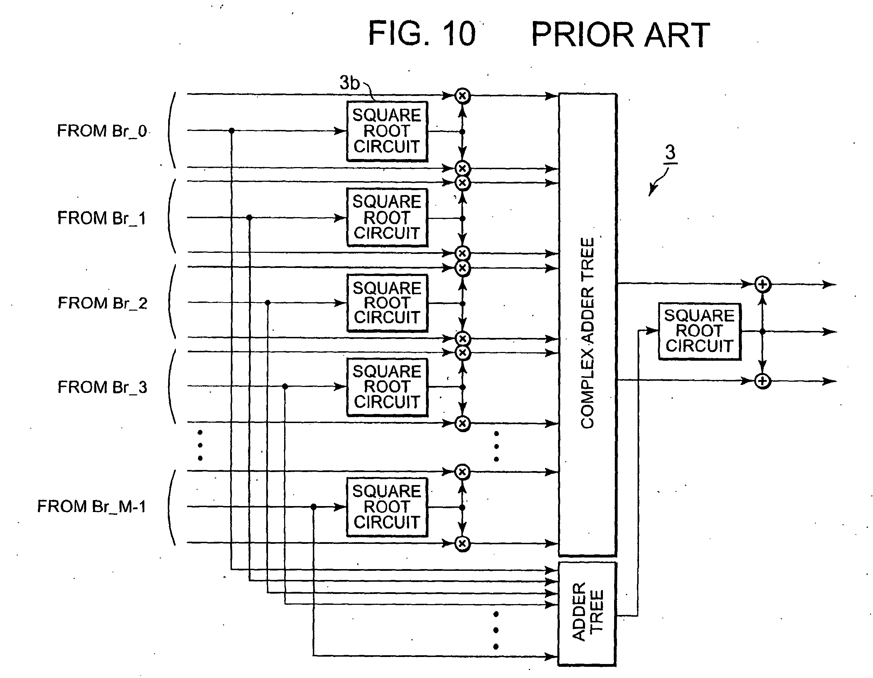

FIG. 10 is a conventional example of the maximum ratio synthesis circuit 3. M branch maximum ratio synthesis diversity is intended to conduct synthesis as $\sum \alpha_i^* \times r_i$ ($\alpha_i^*$ is a conjugate multiple number of $\alpha_i$), where a receiver signal of each branch is $r_i$ (i=1, 2...and M), and a transmission coefficient of each branch is $\alpha_i$ (complex number). The M branch maximum ratio synthesis diversity corresponds to conducting addition with weighting proportional to an SN ratio after uniforming each phase of each branch. Here, an absolute value of $\alpha$ makes no difference, but a relative value between each branch is required to be correct. Therefore, in reality, synthesis is conducted by using a normalized coefficient as shown in Formula (4) so that a sum of all input electric power corresponds with synthesized output electric power.

Formula (4)

$$\sum_{i=0}^{M-1} \frac{\alpha_i}{A} \times r_i \quad , \qquad A = \sqrt{\sum_{k=0}^{M-1} \|\alpha_k\|^2} \qquad (4)$$

In a channel skewness correction output point, each phase of each receiver signal $r_i$ (i=1, 2...and M) of each branch corresponds with each other. Therefore, in FIG. 10, only Formula (5) is executed.

Formula (5)

$$\sum_{i=0}^{M-1} \frac{\|\alpha_i\|}{A} \times r_i \quad , \quad A = \sqrt{\sum_{k=0}^{M-1} \|\alpha_k\|^2} \qquad (5)$$

However, in the level measurement circuit 15, frequency offset detection circuit 16, frequency correction circuit 17, channel skewness detection circuit 18, channel skewness correction circuit 19, and maximum ratio synthesis circuit 3 in the foregoing conventional receiver, calculation is executed on Cartesian coordinates. Therefore, there has been a problem that a required arithmetic operation amount and a required arithmetic operation bit length become large, and a large table memory is required, and therefore, downsizing a circuit becomes difficult.

For example, in the level measurement circuit 15 shown in FIG. 8, a content of the square root of Formula (1) is an electric power value obtained by squaring an amplitude value. Therefore, in order to secure a dynamic range equal to the amplitude value, twice the bit length is required for expression. Regarding a square root circuit 15b as shown in FIG. 8, input bits become twice. Consequently, a circuit whose scale is about fourfold single precision multiplier becomes required.

Further, regarding the complex multiplication conducted by the frequency offset detection circuit 16, it is required to execute four times of actual number multiplication. Further, in the frequency correction circuit 17, memory of the sin, cos table 17c is required for generating a sine wave/cosine wave pair. In addition, only frequency resolution expressible in the sin, cos table 17c can generate the sine wave/cosine wave pair, and therefore, there is a problem that errors are accompanied.

The channel skewness detection circuit 18 shown in FIG. 9 is also required to execute four times of actual number multiplication for conducting complex multiplication. Further, regarding the channel skewness correction circuit 19, which executes the complex multiplication and the actual number division of Formula (3), in the actual number division, a divisor which is the same type as Formula (1) of the level measurement circuit 15 requires a large bit length, and requires process to be normalized with a dividend. Therefore, it is difficult to simplify and downsize the circuit.

In the maximum ratio synthesis circuit 3 shown in FIG. 10, many square root circuits 3b are used, and therefore, downsizing is difficult evidently. Specially, in calculation A in Formula (5), a content of the square root is an electric power sum of M pcs. Therefore, $2\sqrt{M}$-fold bit length becomes required compared to the case of amplitude expression. A scale of the square root circuit 3b becomes about 4M-fold single precision multiplier. Therefore, there has been a problem that the larger M becomes, the more difficult downsizing the circuit becomes.

DISCLOSURE OF THE INVENTION

The present invention is intended to resolve the foregoing conventional problems. It is an object of the invention to provide a receiver capable of being downsized by focusing attention on a fact that CORDIC (Coordinate Rotation Digital Computer) algorithm capable of execution by only addition and subtraction and shift is suitable for Cartesian coordinates/polar coordinates conversion, complex number multiplication and division, and generation of sine wave and cosine wave signals, and by applying the CORDIC algorithm to AGC, AFC (Automatic Frequency Control), channel estimation/compensation, and maximum ratio synthesis diversity process for an inphase signal and a quadrature signal (hereinafter referred to as I signal and Q signal), which are Cartesian coordinates signals.

In order to attain the foregoing object, the receiver of the invention is a receiver comprising; an amplification means for amplifying a receiver signal based on an AGC signal, a CORDIC means for calculating a receiving amplitude of a known symbol which is a constant amplitude, and a control means for generating the AGC signal based on the receiving amplitude calculated by the CORDIC means and applying the AGC signal to the amplification means.

According to the foregoing construction, the receiving amplitude is calculated by the CORDIC means. Therefore, the receiver can be downsized.

Further, the receiver according to claim 1 is a receiver, further comprising a carrier frequency correction means for negating carrier frequency offset, wherein the CORDIC means detects the carrier frequency offset from a delay detection output of a receiving known symbol and a correlation output with the known symbol.

According to the foregoing construction, a receiving amplitude calculation circuit and a carrier frequency offset detection circuit share the CORDIC means with each other. Therefore, the receiver can be downsized.

Further, the receiver of the invention is a receiver, comprising; a means for detecting carrier frequency offset, and a CORDIC means for generating a sine wave and a cosine wave corresponding to the detected carrier frequency offset, and conducting frequency offset correction process.

According to the foregoing construction, the frequency offset is corrected by the CORDIC means. Therefore, the receiver can be downsized.

Further, the receiver of the invention is a receiver, comprising; a CORDIC means for multiple-dividing a receiving known symbol by a known symbol, and detecting a channel skewness, and a CORDIC means for compensating the detected channel skewness.

According to the foregoing construction, the channel skewness is detected and compensated by the CORDIC means. Therefore, the receiver can be downsized.

Further, the receiver of the invention is a receiver, comprising a means for conducting maximum ratio synthesis diversity process while normalizing an output amplitude of a receiver signal of each branch by a systolic allay architecture wherein a CORDIC is a basic cell.

According to the foregoing construction, the maximum ratio synthesis diversity process is conducted by the CORDIC means. Therefore, the receiver can be downsized.

BRIEF DESCRIPTION OF THE DRAWINGS

FIG. 1 is a block diagram showing a level measurement circuit, a frequency offset detection circuit, and a frequency correction circuit in an embodiment of a receiver of the invention;

FIG. 2 is a block diagram showing a modification of the frequency correction circuit of FIG. 1;

FIG. 3 is a block diagram showing a channel skewness detection circuit and a channel skewness correction circuit in the embodiment of the receiver of the invention;

FIG. 4 is a block diagram showing a maximum ratio synthesis circuit in the embodiment of the receiver of the invention;

FIG. 5 is an explanation drawing showing a principle of CORDIC algorithm used in the embodiment of the receiver of the invention;

FIG. 6A is a block diagram showing an example of a CORDIC used in the embodiment of the receiver of the invention;

FIG. 6B is a block diagram showing another example of the CORDIC used in the embodiment of the receiver of the invention;

FIG. 7 is a block diagram showing a conventional and general receiver;

FIG. 8 is a block diagram showing conventional a level measurement circuit, a frequency offset detection circuit, and a frequency correction circuit;

FIG. 9 is a block diagram showing conventional a channel skewness detection circuit and a channel skewness correction circuit; and

FIG. 10 is a block diagram showing a conventional maximum ratio synthesis circuit.

BEST MODE FOR CARRYING OUT THE INVENTION

An embodiment of the invention will be hereinafter described with reference to the drawings. In the invention, AGC, AFC, channel estimation/compensation, and maximum ratio synthesis diversity process are conducted on polar coordinates by using CORDIC (Coordinate Rotation Digital Computer) algorithm capable of executing Cartesian coordinates/polar coordinates conversion by only addition and subtraction and shift. Conventionally, the CORDIC has been widely used for a pocket calculator and the like as an algorithm capable of integrally calculating many elementary functions.

Meanwhile, in a receiver for radio communications, regarding signals, a complex number expressed as, for example, $I(t)+jQ(t)=R(t)e^{j\theta(t)}$ is often computed in relation to $I(t)$ and $Q(t)$ of Cartesian coordinates expressions. However, in reality, there are many processes using polar coordinates values $R(t)$ and $\theta(t)$, and processes in which a required arithmetic operation amount and a required arithmetic operation bit length can be reduced if calculation is made on the polar coordinates. Examples of the latter case are as follows:

1. Regarding complex multiplication, executing four actual multiplications is required on the Cartesian coordinates, while one actual multiplication is enough on the polar coordinates.

2. Regarding complex division, executing a complex multiplication and two actual divisions are required on the Cartesian coordinates, while one actual division is enough on the polar coordinates.

3. Regarding calculation of an amplitude value, on the polar coordinates, it is required to execute square root calculation after obtaining an electric power value requiring twice arithmetic operation bit length. Meanwhile, in the case that a polar coordinates value is obtained by using the CORDIC, the amplitude value can be directly obtained without largely increasing an arithmetic operation bit length by addition and subtraction and shift.

Further, in the process using a sine wave and a cosine wave, by execution while generating the sine wave and the cosine wave by the CORDIC, a table can become unnecessary, and downsizing a circuit can be realized.

Therefore, in a level measurement circuit, a frequency offset detection circuit, and a frequency correction circuit of a receiver shown in FIG. 8, it is possible to obtain the following advantages compared to conventional receivers by respectively applying the CORDIC algorithm thereto:

(1) Regarding an amplitude of a receiving known symbol, by direct calculation with the CORDIC, increase of a required arithmetic operation bit number can be inhibited, and a square root circuit can be cut.
(2) Calculation of an amplitude of a receiving known symbol and a frequency offset amount can be executed by sharing the CORDIC with each other.
(3) By generating a sine wave/cosine wave pair required for frequency offset correction process by the CORDIC, a table memory can become unnecessary, and generated frequency precision can be improved.

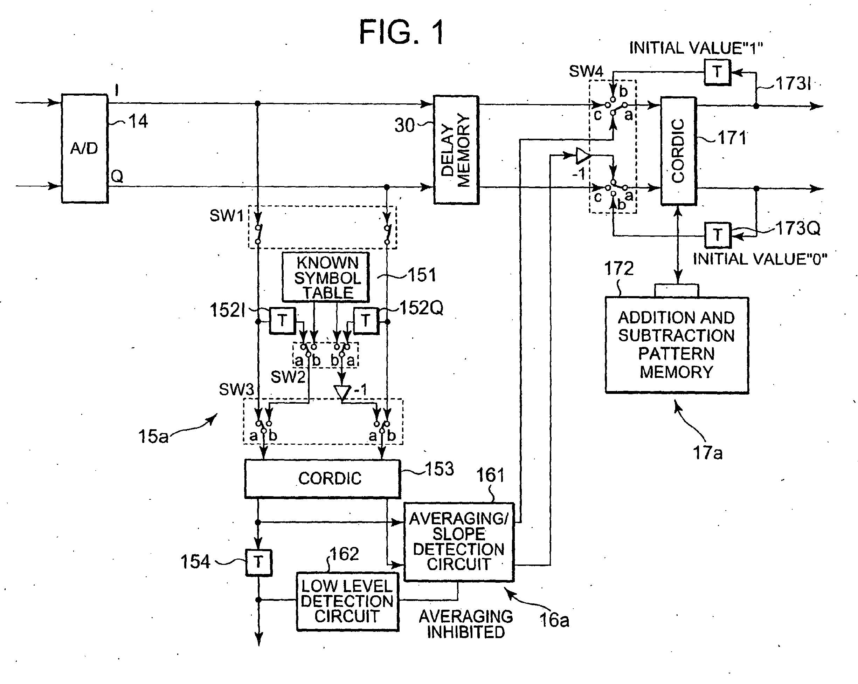

FIG. 1 is a block diagram showing a level measurement circuit 15a, a frequency offset detection circuit 16a, and a frequency correction circuit 17a in the embodiment of a receiver of the invention. The circuits 15a, 16a, and 17a are operated by selectively inputting a receiving known symbol from an A/D converter 14 at a switch SW1 and by following the procedure as below.

(1) Calculation of receiving amplitude

The level measurement circuit 15a comprises switches SW1, SW2, and SW3, a known symbol table 151, registers (T) 152I, 152Q, and 154, a CORDIC 153 and the like. A delay memory 30 outputs an output of the A/D converter 14 to the frequency correction circuit 17a by delaying the output of the A/D converter 14 by just processing time of the level measurement circuit 15a and the frequency offset detection circuit 16a. First, the switches SW2, SW3, and SW4 are all connected to side a (outputs I and Q side of the A/D converter 14), and a receiving known symbol is let through the CORDIC 153 to conduct Cartesian coordinates/polar coordinates conversion. Then, a phase of the receiving known symbol is stored in the CORDIC 153 as an addition and subtraction pattern in conversion. Meanwhile, an amplitude of the receiving known symbol appears in I output of the CORDIC 153. Here, an amplitude value is output to an AGC control circuit 21 shown in FIG. 7 via the register 154.

(2) Calculation of frequency offset (when symbol synchronization precision is low)

The frequency offset detection circuit 16a comprises the CORDIC 153 shared with the level measurement circuit 15a, an averaging/slope detection circuit 161, and a low level detection circuit 162. Only the switch SW3 is connected to side b (output side of the A/D converter) to let a receiving conjugate complex known symbol which is one symbol time before through the CORDIC 153. Then, by operating in accordance with the addition and subtraction pattern stored in the CORDIC 153 by the foregoing (1) Calculation of receiving amplitude, phase amounts of I and Q outputs of the CORDIC 153 show phase variations of a receiving known symbol from one symbol time before. Therefore, I and Q outputs of the CORDIC 153 are averaged by the averaging/slope detection circuit 161 to obtain a frequency offset value (phase variation per one symbol time).

(2a) Calculation of frequency offset (when symbol synchronization precision is high)

The switch SW2 is connected to side b (known symbol table 151 side), and the switch SW3 is connected to side b (output side of the A/D converter). A conjugate complex known symbol is let through the CORDIC 153. Then, by operating in accordance with the addition and subtraction pattern stored in the CORDIC 153 by the foregoing (1) Calculation of receiving amplitude, phase amounts of I and Q outputs of the CORDIC 153 show instantaneous phase errors of a receiving known symbol. Therefore, slopes of the instantaneous phase errors in relation to time are obtained by minimum square method as instantaneous phase rotational rates, which are averaged to obtain a frequency offset value. As conventional, an unreliable instantaneous phase rotational rate value in a small receiving amplitude is detected by the low level detection circuit 162, and excluded from the averaging process.

(3) Correction of frequency offset

The frequency correction circuit 17a comprises a switch SW4, a CORDIC 171, an addition and subtraction pattern memory 172, registers 173I and 173Q and the like. When a frequency offset value is obtained, the switch SW4 is connected to side a (averaging/slope detection circuit 161 side), the frequency offset value is let through the CORDIC 171, and Cartesian coordinates/polar coordinates conversion is conducted. Then, an inversion value of an average phase variation in one symbol time (that is, a frequency offset amount), $-\Delta f$ is formed inside the CORDIC 171 as an addition and subtraction pattern in conversion. The formed value is stored in the addition and subtraction pattern memory 172. Next, 1 and 0 are respectively set as initial values in the two external registers 173I and 173Q. Then, the following procedure is repeated:

Step 1: (generation of a sine wave/cosine wave pair)

$-\Delta f$ value is loaded from the addition and subtraction pattern memory 172 to the CORDIC 171. The switch SW4 is connected to side b, and values of the external registers 173I and 173Q are let through the CORDIC 171 and updated. (An amplitude of a sine wave/cosine wave pair wherein a $-\Delta f$ phase proceeds can be obtained.)

Step 2: (Phase calculation of sine wave/cosine wave pair)

Again, the values of the external registers 173I and 173Q are let through the CORDIC 171, and Cartesian coordinates/polar coordinates conversion is conducted. The phase thereof is retained inside the CORDIC 171 as an addition and subtraction pattern.

Step 3: (frequency correction of receiving symbol)

The switch SW 4 is connected to side c (output side of the A/D converter), and a receiving symbol is let through the CORDIC 171.

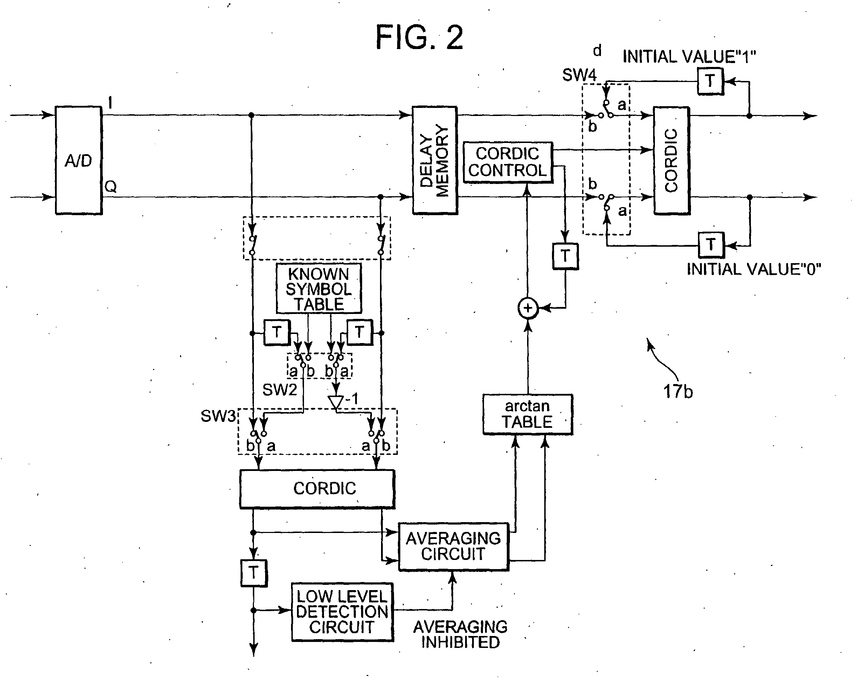

It is known that, when a sine wave/cosine wave pair is generated by the foregoing method, errors in the CORDIC arithmetic operation are accumulated, and a large skewness is generated. However, in the digital radio communications, in many cases, a $\Delta f$ value is often updated, and the CORDIC 171 is reset, and therefore, such skewness is insignificant. However, it is known that, when reset cannot be done easily, it is appropriate that $\Delta f$ input to the CORDIC 171 is not a Cartesian coordinates value but a phase value, and a sine wave/cosine wave pair at current time is calculated by including a residual phase error when a sine wave/cosine wave pair was calculated one sample before (called error feedback). In this case, the frequency correction circuit 17b has a construction as shown in FIG. 2

As evidenced by comparison between FIG. 1 and FIG. 8, in the receiver of the invention, the CORDIC 153 is shared by calculations of an amplitude and a phase change of a receiving known symbol, and a square root circuit 15b (FIG. 8) can be cut. Further, the CORDIC 171 is shared by a sine wave/cosine wave pair and frequency correction process, and a sine wave and cosine wave table 17c can be cut.

Further, in a channel skewness detection circuit and a channel skewness correction circuit of a receiver shown in FIG. 7, by respectively applying the CORDIC algorithm thereto, the following advantages can be obtained compared to conventional receivers.

(4) Complex division for channel skewness detection (complex multiplication is used by devising a coefficient table) can be calculated by one CORDIC instead of four actual multipliers.

(5) By executing complex division for channel skewness correction by using the CORDIC, increase of a required arithmetic operation bit number can be inhibited, and a square root circuit can be cut.

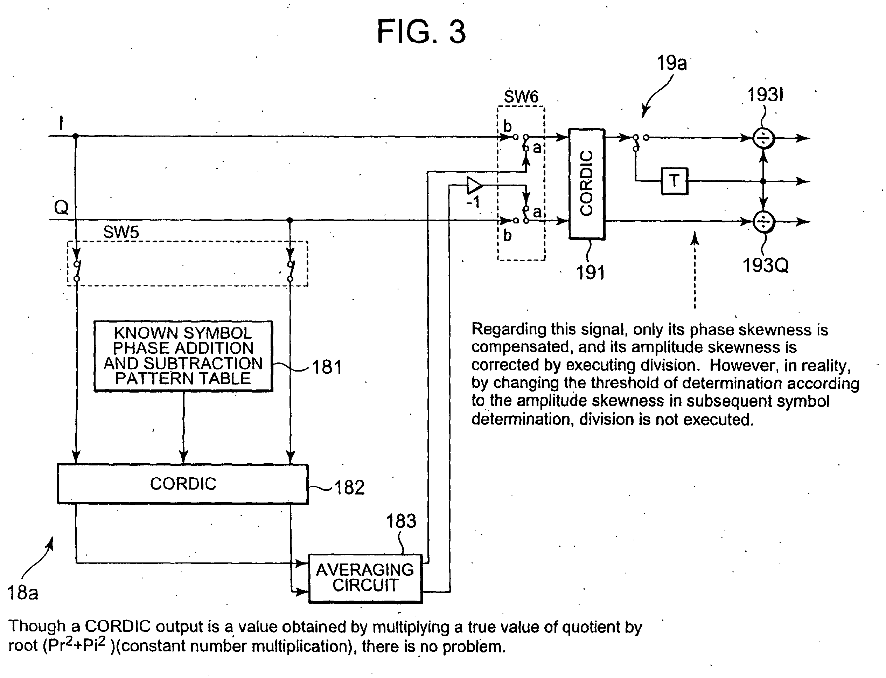

FIG. 3 is a block diagram showing a channel skewness detection circuit 18a and a channel skewness correction circuit 19a in the embodiment of the receiver of the invention. The channel skewness detection circuit 18a comprises a switch SW5, a known symbol phase addition and subtraction pattern table 181, a CORDIC 182, and an averaging circuit 183. The channel skewness correction circuit 19a comprises a switch SW6, a CORDIC 191, a register 192, dividers 193I and 193Q and the like. The circuits 18a and 19a are operated by selectively inputting a receiving known symbol from the A/D converter 14 at the switch SW5, and by following the procedure as below.

(4) Calculation of channel skewness detection

The switch SW6 of the channel skewness correction circuit 19a is connected to side a (channel skewness detection circuit 18a side). An addition and subtraction pattern representing a conjugate complex known symbol phase is set from the known symbol phase addition and subtraction pattern table 181 into the CORDIC 182. Outputs when a receiving known symbol is let through the CORDIC 182 represent instantaneous channel skewnesses, which are averaged to obtain a channel skewness.

(5) Cartesian coordinates/polar coordinates conversion of channel skewness

The channel skewness detected by the foregoing (4) Calculation of channel skewness detection is let through the CORDIC 191, and Cartesian coordinates/polar coordinates conversion is conducted. Then, a phase of the channel skewness is stored inside the CORDIC 191 as an addition and subtraction pattern in conversion. Meanwhile, an amplitude of the channel skewness which appears in I output of the CORDIC 191 is stored in the external register 192.

(5a) Calculation of channel skewness correction

The switch SW6 is connected to side b (output side of the A/D converter), and a receiving symbol is let through the CORDIC 191. In result, a phase skewness is corrected. Next, by the dividers 193I and 193Q, I output and Q output of the CORDIC 191 are respectively corrected by division by the amplitude skewness stored in the external register 192.

Regarding the foregoing process, supplementary explanation will be given as follows. First, the channel skewness detection process can be conducted by the complex division as shown in Formula (2) of the conventional example. Meanwhile, in the foregoing (4) Calculation of channel skewness detection, only rotational arithmetic operation by the CORDIC is conducted. Therefore, a phase skewness can be correctly detected, while an amplitude skewness is not divided, and therefore, the amplitude skewness appears as a multiplied known symbol amplitude. However, as long as the known symbol amplitude is constant, such errors of a constant number multiplication whose magnitude is known are insignificant in other processes, and therefore, such errors are left without change.

Meanwhile, the channel skewness correction process is also conducted by the complex division shown in Formula (3) of the conventional example. In this case, since the divisor is a variable (channel skewness), calculation is not easy. A quotient of this complex division is expressed as Formula (6).

Formula (6)

$$\frac{I+jQ}{dI+jdQ} = \frac{(I+jQ)(dI-jdQ)}{dI^2+dQ^2} = \frac{(dI\cdot I+dQ\cdot Q)+j(-dQ\cdot I+dI\cdot Q)}{dI^2+dQ^2}$$

$$\mathrm{Re}\left[\frac{I+jQ}{dI+jdQ}\right] = \frac{dI}{dI^2+dQ^2}\cdot I + \frac{dQ}{dI^2+dQ^2}\cdot Q = \frac{1}{dR}(\cos\phi\cdot I+\sin\phi\cdot Q)$$

$$\mathrm{Im}\left[\frac{I+jQ}{dI+jdQ}\right] = \frac{-dQ}{dI^2+dQ^2}\cdot I + \frac{dI}{dI^2+dQ^2}\cdot Q = \frac{1}{dR}(-\sin\phi\cdot I+\cos\phi\cdot Q)$$

Therefore,

$$\begin{bmatrix} \mathrm{Re}\left[\dfrac{I+jQ}{dI+jdQ}\right] \\ \mathrm{Im}\left[\dfrac{I+jQ}{dI+jdQ}\right] \end{bmatrix} = \frac{1}{dR}\begin{bmatrix} \cos\phi & \sin\phi \\ -\sin\phi & \cos\phi \end{bmatrix}\begin{bmatrix} I \\ Q \end{bmatrix}, \quad \text{Wherein, } dR=\sqrt{dI^2+dQ^2}, \quad \phi=\arctan\frac{dQ}{dI}$$

$$(6)$$

In Formula (6), a matrix multiplication part is absolutely the rotational arithmetic operation conducted by the CORDIC. Therefore, if the rest is provided with actual division by the channel amplitude skewness dR stored in the external register 192, complex division can be conducted.

As evidenced by comparison between FIG. 3 and FIG. 7, in the receiver of the invention, the complex multiplication of the channel skewness detection process is conducted by one CORDIC arithmetic operation, and therefore, four multipliers can be cut. Further, by conducting the multiple division of the channel skewness correction by the CORDIC, the square root circuit can be cut.

Further, when the CORDIC algorithm is applied to the maximum ratio synthesis circuit of the receiver, the following advantages can be obtained compared to the conventional receivers:

· The M branch maximum ratio synthesis can be realized by a tree construction of the CORDIC.
· The square root circuit becomes unnecessary.

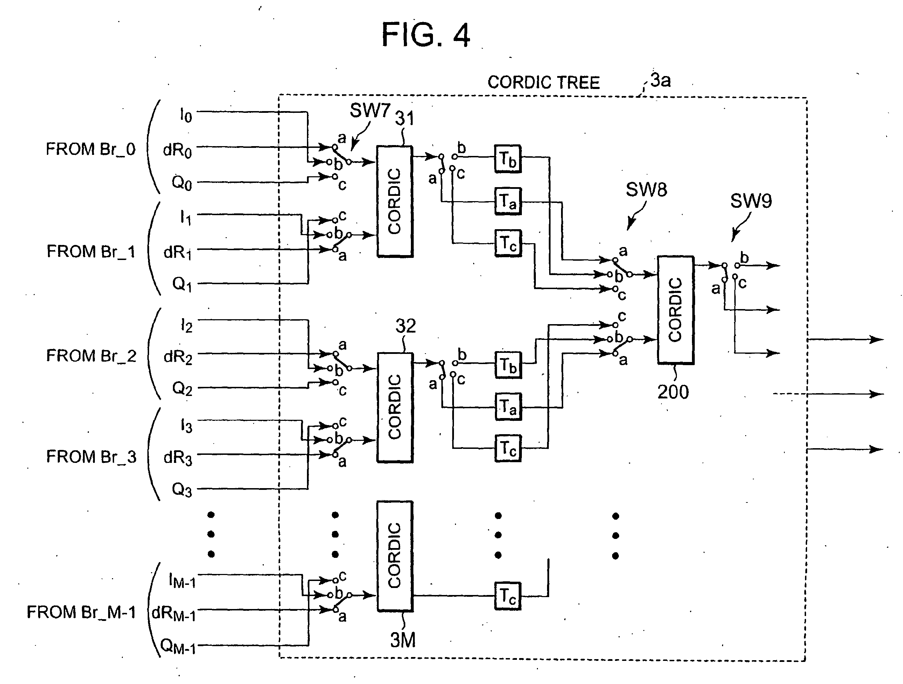

FIG. 4 is a block diagram showing a maximum ratio synthesis circuit 3a in the embodiment of the receiver of the invention. The maximum ratio synthesis circuit 3a shown in FIG. 4 comprises switches SW7 of M channels, CORDICs 31 to 3M, and registers Tb, Ta, and Tc. Further, the maximum ratio synthesis circuit 3a shown in FIG. 4 comprises switches SW8 and SW9 for processing outputs of the registers Tb, Ta, and Tc of each channel and a CORDIC 200. This circuit 3a receives M sets of channel skewness correction outputs, $r_i(=I_i+jQ_i)$, and $dR_i$ of the following Formula (7) (i=0, 1, 2... and M-1).

Formula (7)

$$dR_i \; (= \sqrt{dI_i^2 + dQ_i^2}) \tag{7}$$

As shown in the conventional example, addition is conducted by multiplying each branch by weighting proportional to each SN ratio of each branch as shown in Formula (8). The channel amplitude skewness dR represents a ratio between "receiving symbol amplitude and transmission symbol amplitude," and its amount is proportional to an SN ratio.

Formula (8)

$$\sum_{i=0}^{M-1} \frac{dR_i}{A} \times r_i \quad , \quad A = \sqrt{\sum_{k=0}^{M-1} dR_i^2} \tag{8}$$

In Formula (8), a synthesis output where it is M=2 becomes Formula (9), which can be obtained as I output when an addition and subtraction pattern of a phase $\phi$ is stored in the CORDIC, and is let through ($I_0$, $I_1$) and ($Q_0$, $Q_1$).

Formula (9)

$$\frac{dR_0}{\sqrt{dR_0^2 + dR_1^2}} r_0 + \frac{dR_1}{\sqrt{dR_0^2 + dR_1^2}} r_1 = \cos\phi \cdot r_0 + \sin\phi \cdot r_1, \; \phi = \arctan\frac{dR_1}{dR_0} \tag{9}$$

Next, also where it is M=3, expression is enabled by a combination of the maximum ratio synthesis where it is M=2 as shown in Formulas (10) and (11). Therefore, the CORDIC can be applied. Consequently, by mathematical induction, the CORDIC can be applied to a given M.

Formula (10)

$$\frac{dR_0}{\sqrt{dR_0^2 + dR_1^2 + dR_2^2}} r_0 + \frac{dR_1}{\sqrt{dR_0^2 + dR_1^2 + dR_2^2}} r_1 + \frac{dR_2}{\sqrt{dR_0^2 + dR_1^2 + dR_2^2}} r_2$$

$$= \frac{\sqrt{dR_0^2 + dR_1^2}}{\sqrt{dR_0^2 + dR_1^2 + dR_2^2}} r_1' + \frac{dR_2}{\sqrt{dR_0^2 + dR_1^2 + dR_2^2}} r_2$$

$$= \cos\phi_1 \cdot r_0 + \sin\phi_1 \cdot r_1 \quad , \quad \phi_1 = \arctan\frac{dR_2}{\sqrt{dR_0^2 + dR_1^2}} \tag{10}$$

Formula (11)

$$r_1' = \frac{dR_0}{\sqrt{dR_0^2 + dR_1^2}} r_0 + \frac{dR_1}{\sqrt{dR_0^2 + dR_1^2}} r_1 = \cos\phi \cdot r_0 + \sin\phi \cdot r_1, \; \phi = \arctan\frac{dR_1}{dR_0} \tag{11}$$

Maximum ratio synthesis of branches 0 and 1 by the CORDIC 31 in FIG. 4 will be hereinafter descried.

(1) When an input of the switch SW7 is connected to side a (channel amplitude skewness dR), and a vector ($dR_0$, $dR_1$) is let through the CORDIC 31 to conduct Cartesian coordinates/polar coordinates conversion, a vector phase is stored inside the CORDIC 31 as an addition and subtraction pattern in conversion. Meanwhile, a vector amplitude which appears in I output of the CORDIC 31 (refer to Formula 12) is stored in the external register Ta.

Formula (12)

$$\sqrt{dR_0{}^2 + dR_1{}^2} \tag{12}$$

(2) When an input of the Switch SW7 is connected to side b (I side), and a vector ($I_0$, $I_1$) is let through the CORDIC 31, an inphase output of a maximum ratio synthesis output appears in I output of the CORDIC 31, which is stored in the external register Tb.

(3) When an input of the Switch SW7 is connected to side c (Q side), and a vector ($Q_0$, $Q_1$) is let through the CORDIC 31, an inphase output of a maximum ratio synthesis output appears in I output of the CORDIC 31, which is stored in the external register Tc.

The outputs of the registers Tb and Tc obtained as above are two branch maximum ratio synthesis outputs. In FIG. 4, every two braches is incrementally synthesized to execute the M branch maximum ratio synthesis by a tree construction executing pipeline operation by using the external registers Ta, Tb, and Tc.

As evidenced by comparison between FIG. 4 and FIG. 10, in the receiver of the invention, by using'the CORDIC, the number of the square root circuits 3b shown in FIG. 10 can be significantly cut. Further, since every two branches is synthesized without using electric power expression (for example, an electric power sum of M pcs), a required arithmetic operation bit number is never increased locally, and circuits can be realized regularly.

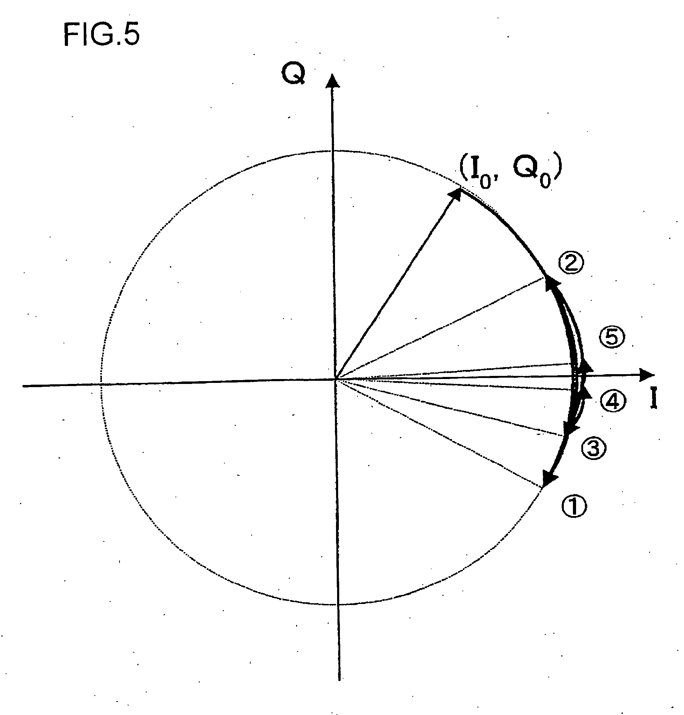

Next, an outline of the CORDIC algorithm will be hereinafter described. As shown in FIG. 5, when a Cartesian coordinates value ($I_0$, $Q_0$) is given on a plane, it is evident that regarding its polar coordinates value (R, θ), when a rotational width is narrowed while a rotational direction is decided so that the coordinates become more closer to I axis (that is, a negative direction in the case that a Q coordinates value is positive, and a positive direction in the case that the Q coordinates value is negative), an I coordinates value becomes close to R, and a sum of the rotational angles then becomes close to 0. Calculation of FIG. 5 when the number of iteration is N is expressed as Formula (13). (Decoding in the formula is sequentially determined according to symbols of $Q_k$:k=1, 2...N. Further, values of $\theta_k$:k=1, 2... N will be described later.)

Formula (13)

$$\begin{pmatrix} I_N \\ Q_N \end{pmatrix} = \begin{pmatrix} \cos\theta_N & \mp\sin\theta_N \\ \pm\sin\theta_N & \cos\theta_N \end{pmatrix} \begin{pmatrix} \cos\theta_{N-1} & \mp\sin\theta_{N-1} \\ \pm\sin\theta_{N-1} & \cos\theta_{N-1} \end{pmatrix} \cdots \begin{pmatrix} \cos\theta_1 & \mp\sin\theta_1 \\ \pm\sin\theta_1 & \cos\theta_1 \end{pmatrix} \begin{pmatrix} I_0 \\ Q_0 \end{pmatrix}$$

$$= \prod_{k=1}^{N} \cos\theta_k \cdot \begin{pmatrix} 1 & \mp\tan\theta_N \\ \pm\tan\theta_N & 1 \end{pmatrix} \begin{pmatrix} 1 & \mp\tan\theta_{N-1} \\ \pm\tan\theta_{N-1} & 1 \end{pmatrix} \cdots \begin{pmatrix} 1 & \mp\tan\theta_1 \\ \pm\tan\theta_1 & 1 \end{pmatrix} \begin{pmatrix} I_0 \\ Q_0 \end{pmatrix}$$

$$\tag{13}$$

Here, when $\theta_k$ is selected so that $\tan\theta_k = 2^{-k}$ is obtained, Formula (13) can be executed by addition and subtraction and shift as Formula (14). (An amplitude will be finally corrected by multiplying by $1/K_N$. $1/K_N$ can be previously calculated.)

Formula (14)

$$\begin{pmatrix} I_N \\ Q_N \end{pmatrix} = K_N \begin{pmatrix} 1 & \mp 2^{-N} \\ \pm 2^{-N} & 1 \end{pmatrix} \begin{pmatrix} 1 & \mp 2^{-(N-1)} \\ \pm 2^{-(N-1)} & 1 \end{pmatrix} \cdots \begin{pmatrix} 1 & \mp 2^{-1} \\ \pm 2^{-1} & 1 \end{pmatrix} \begin{pmatrix} I_0 \\ Q_0 \end{pmatrix}$$

$$\text{Wherein,} \quad K_N = \prod_{k=1}^{N} \cos \theta_k \quad , \quad \theta_k = \tan^{-1}\left(2^{-k}\right)$$

$$(14)$$

On the contrary, converting the polar coordinates value $(R_0, \theta_0)$ to the Cartesian coordinates value (I, Q) is enabled by using the same circuit, since it is possible to start from $(R_0, 0)$ and make sequential rotation by $\theta_k$ in the direction wherein $\theta_0$ becomes close to 0. In particular, when an initial value, is set to (1, 0), $\cos \theta_0$ and $\sin \theta_0$ can be concurrently calculated.

As described above, the CORDIC algorithm allows calculation of many function values by a simple identical circuit. Therefore, in the first stage of its introduction, the CORDIC algorithm had an immense public response. In those days, the CORDIC algorithm was mounted on an electric computer of spaceship Apollo, and was used for various pocket calculators. Since polynomial approximation has become a mainstream for current electric computers, the CORDIC algorithm has not been much used. However, recently, application of the CORDIC algorithm to signal processing circuits has been considered again.

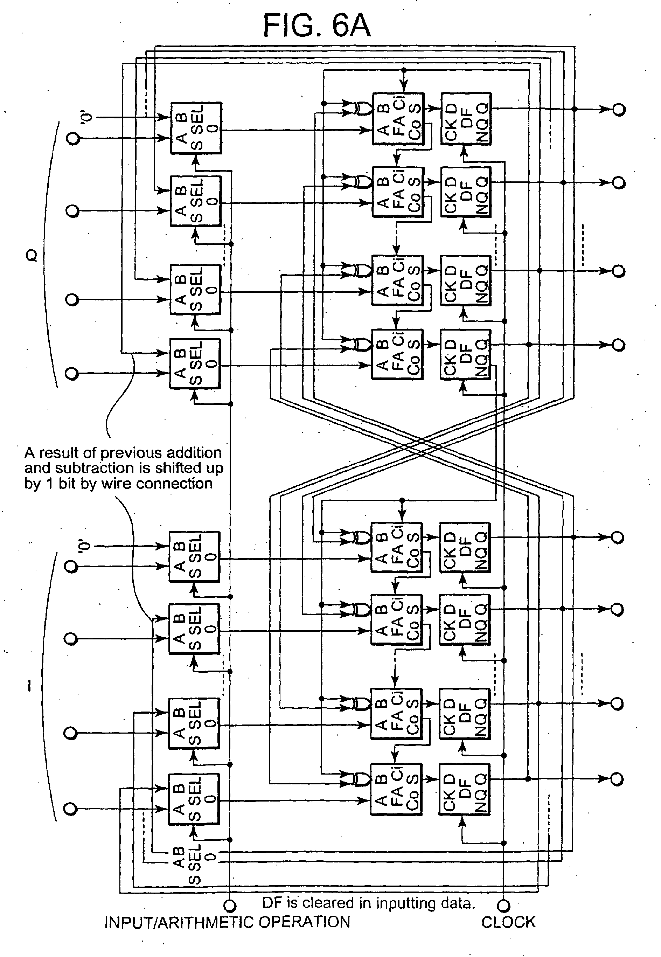

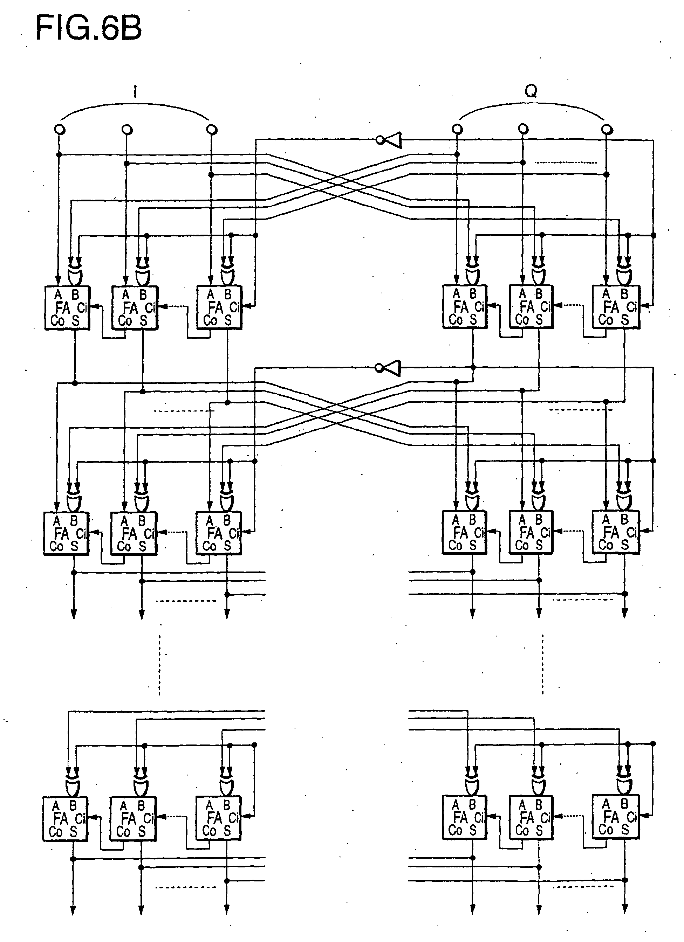

FIGS. 6A and 6B show block diagrams of the CORDIC. TYPE I of FIG. 6A has a construction of a processor type wherein an iterative arithmetic operation of the CORDIC is conducted repeatedly in the same circuit. TYPE II of FIG. 6B is a type which develops the TYPE I to an allay, wherein its circuit scale corresponds to about two actual multipliers. In the CORDIC algorithm, in order to determine whether the next iterative calculation should be addition or subtraction based on a result of previous addition and subtraction, carry propagation delay in addition and subtraction cannot be neglected. Therefore, high speed operation is difficult in the CORDIC algorithm. However, as a method to reduce CORDIC arithmetic operation time, the followings and the like are suggested: 1. Introduction of redundancy binary digit, wherein a carry propagation length is small; and 2. Reduction of the number of iteration by high radix arithmetic operation.

INDUSTRIAL APPLICABILITY

As described above, in the invention, AGC, AFC, channel estimation/compensation, and maximum ratio synthesis diversity process are conducted on polar coordinates by using CORDIC algorithm capable of executing Cartesian coordinates/polar coordinates conversion by only addition and subtraction and shift. Therefore, the following advantages can be obtained.

1. It is possible to cut required arithmetic operation bits of amplitude calculation in a level measurement circuit, and cut a square root circuit.
2. Level measurement and frequency offset detection can be executed by sharing the CORDIC with each other.
3. By generating a sine wave/cosine wave pair required for frequency offset correction by the CORDIC, a table memory becomes unnecessary, and generated frequency precision can be improved.
4. Complex multiplication for channel skewness detection can be calculated by one CORDIC instead of four actual multipliers.
5. By executing multiple division for channel skewness correction by using the CORDIC, increase of a required arithmetic operation bit number is inhibited, and a square root circuit can be cut.
6. M branch maximum ratio synthesis can be realized by a tree construction of the CORDIC, and a square root circuit can be cut.

Consequently, downsizing a radio receiver can be realized easily.

**Claims**

1. A receiver comprising:

   an amplification means for amplifying a receiver signal based on an AGC signal;
   a CORDIC means for calculating a receiving amplitude of a known symbol which is a constant amplitude; and
   a control means for generating the AGC signal based on the receiving amplitude calculated by the CORDIC means and applying the AGC signal to the amplification means.

2. The receiver according to claim 1, further comprising a carrier frequency correction means for negating carrier frequency offset, wherein the CORDIC means detects the carrier frequency offset from a delay detection output of a receiving known symbol and a correlation output with the known symbol.

3. A receiver comprising:

   a means for detecting carrier frequency offset; and
   a CORDIC means for generating a sine wave and a cosine wave corresponding to the detected carrier frequency offset, and conducting frequency offset correction process.

4. A receiver comprising:

   a CORDIC means for multiple-dividing a receiving known symbol by a known symbol, and detecting a channel skewness; and
   a CORDIC means for compensating the detected channel skewness.

5. A receiver comprising a means for conducting maximum ratio synthesis diversity process while normalizing an output amplitude of a receiver signal of each branch by a systolic allay architecture wherein a CORDIC is a basic cell.

# FIG. 1

INITIAL VALUE"1"

INITIAL VALUE"0"

AVERAGING INHIBITED

EP 1 517 501 A1

# FIG. 2

INITIAL VALUE"1"

INITIAL VALUE"0"

17b

EP 1 517 501 A1

## FIG. 3

Regarding this signal, only its phase skewness is compensated, and its amplitude skewness is corrected by executing division. However, in reality, by changing the threshold of determination according to the amplitude skewness in subsequent symbol determination, division is not executed.

Though a CORDIC output is a value obtained by multiplying a true value of quotient by root $(Pr^2+Pi^2)$(constant number multiplication), there is no problem.

# FIG. 4

CORDIC TREE 3a

FROM Br_0: $I_0$, $dR_0$, $Q_0$ — SW7, 31
FROM Br_1: $I_1$, $dR_1$, $Q_1$
FROM Br_2: $I_2$, $dR_2$, $Q_2$ — 32
FROM Br_3: $I_3$, $dR_3$, $Q_3$
FROM Br_M-1: $I_{M-1}$, $dR_{M-1}$, $Q_{M-1}$ — 3M

CORDIC, $T_b$, $T_a$, $T_c$, SW8, SW9, 200

EP 1 517 501 A1

FIG.5

# FIG. 6A

A result of previous addition and subtraction is shifted up by 1 bit by wire connection

DF is cleared in inputting data.

INPUT/ARITHMETIC OPERATION

CLOCK

EP 1 517 501 A1

## FIG.6B

FIG. 7   PRIOR ART

FIG. 8   PRIOR ART

# FIG. 9   PRIOR ART

Regarding this signal, its phase skewness is mainly compensated, and its amplitude skewness is completely corrected by executing division.
However, in reality, by changing the threshold of determination according to the amplitude skewness in subsequent symbol determination, division is not executed.

# FIG. 10    PRIOR ART

EP 1 517 501 A1

## INTERNATIONAL SEARCH REPORT

| International application No. |
|---|
| PCT/JP03/08144 |

**A. CLASSIFICATION OF SUBJECT MATTER**
Int.Cl$^7$ H04L27/38, H03G3/20, H04L1/02, H04B7/08, H04B1/16

According to International Patent Classification (IPC) or to both national classification and IPC

**B. FIELDS SEARCHED**

Minimum documentation searched (classification system followed by classification symbols)
Int.Cl$^7$ H04L27/38, H03G3/20, H04L1/02, H04B7/08, H04B1/16

Documentation searched other than minimum documentation to the extent that such documents are included in the fields searched
| | | | |
|---|---|---|---|
| Jitsuyo Shinan Koho | 1922-1996 | Toroku Jitsuyo Shinan Koho | 1994-2003 |
| Kokai Jitsuyo Shinan Koho | 1971-2003 | Jitsuyo Shinan Toroku Koho | 1996-2003 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 7-508389 A (Comstream Corp.), 14 September, 1995 (14.09.95), Page 9, upper left column, line 4 to page 13, lower right column, line 3; Figs. 2 to 8 & WO 94/16505 A2 & AU 9459615 A & EP 628229 A1 & NO 9403189 A & CZ 9401975 A3 & WO 94/16505 A3 & HU 68003 T & NZ 261042 A & US 5550869 A & CN 1092231 A & AU 682336 B & BR 9305988 A & AU 9749332 A & EP 848523 A2 & CZ 9702794 A3 & CZ 9702795 A3 & CZ 9702796 A3 & EP 628229 B1 & DE 69326140 E & CA 2130269 C & AU 716743 B & RU 2128399 C1 | 1-2 |

☒ Further documents are listed in the continuation of Box C.　　☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 18 September, 2003 (18.09.03) | 07 October, 2003 (07.10.03) |

| Name and mailing address of the ISA/ | Authorized officer |
|---|---|
| Japanese Patent Office | |
| Facsimile No. | Telephone No. |

Form PCT/ISA/210 (second sheet) (July 1998)

**INTERNATIONAL SEARCH REPORT**

| International application No. |
| --- |
| PCT/JP03/08144 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y | JP 2002-175283 A (Matsushita Electric Industrial Co., Ltd.), 21 June, 2002 (21.06.02), Par. Nos. [0065] to [0078]; Fig. 5 (Family: none) | 5 |
| Y | JP 2001-196982 A (Lucent Technologies Inc.), 19 July, 2001 (19.07.01), Par. No. [0048] & EP 1100213 A2 & CA 2323368 A1 & US 6600796 B1 | 5 |
| A | JP 2001-111640 A (Mitsubishi Electric Information Technology Center America, Inc.), 20 April, 2001 (20.04.01), Par. Nos. [0006] to [0021]; Figs. 1 to 7 & EP 1085427 A2 & US 6526110 B1 | 1,4 |
| A | JP 2001-044868 A (Sony International GmbH.), 16 February, 2001 (16.02.01), Par. Nos. [0094] to [0103]; Figs. 9 to 10 & EP 1065853 A1 & CA 2312531 A1 & CN 1279544 A & KR 2001007583 A | 1,3 |
| A | JP 11-127210 A (Micronas Intermetall GmbH.), 11 May, 1999 (11.05.99), Par. Nos. [0013] to [0020]; Fig. 1 & EP 895386 A1 & CN 1210398 A & KR 99014319 A & TW 390079 A & US 6215830 B1 & EP 895386 B1 & DE 59709234 G | 2,4 |
| A | JP 8-237318 A (AT & T Corp.), 13 September, 1996 (13.09.96), Par. Nos. [0011] to [0035]; Figs. 1, 7 & TW 266365 A & EP 717512 A2 & CN 1138814 A | 4 |

Form PCT/ISA/210 (continuation of second sheet) (July 1998)